# FASCICULE DE BREVET EUROPEEN

(11) **EP 0 416 989 B1**
(45) Date de publication et mention de la délivrance du brevet: **18.11.1993**
(21) Numéro de dépôt: 90402425.4
(22) Date de dépôt: 03.09.1990
(51) Int. Cl.: G02B 6/30, G02B 6/28, G02B 6/34

(54) **Dispositif de couplage entre éléments de transmission optique**
Kopplungsvorrichtung zwischen optischen Übertragungselementen
Coupling device between optical transmission elements

(30) Priorité: 08.09.1989 FR 8911779
(43) Date de publication de la demande: 13.03.1991
(73) Titulaire: SAT (Société Anonyme de Télécommunications), 75116 Paris (FR)
(72) Inventeur: Morillon, Pierre Charles, F-75631 Paris Cédex 13 (FR); Maurel, Bernard François, F-75631 Paris Cédex 13 (FR); Legeay, Gérard André, F-75631 Paris Cédex 13 (FR)
(74) Mandataire: Martinet & Lapoux

(56) Documents cités:
- EP-A- 0 050 545
- FR-A- 2 534 699
- APPLIED OPTICS, vol. 19, no. 21, 1 novembre 1980, pages 3588-3590, Optical Society of America; R. WATANABE et al.: "Slab waveguide demultiplexer for multimode optical transmission in the 1.0-1.4-mum wavelenght region"
- AGARD CONFERENCE PROCEEDINGS, Istanbul, 23-27 septembre 1985, no. 383, pages 11-1 - 11-8; V. RUSSO et al.: "A spherical waveguide multiplexer - demultiplexer"
- IBM TECHNICAL DISCLOSURE BULLETIN, vol. 23, no. 3, août 1980, page 978, New York, US; F.J. BEALLE: "Parabolic coupler for fibre optics"

## Description

La présente invention concerne d'une manière générale le couplage entre un premier élément de transmission optique et un ou plusieurs seconds éléments de transmission optique.

Un élément de transmission optique peut être une fibre optique, un élément photoémetteur ou photorécepteur, ou un système optique, par exemple. Un tel élément de transmission matérialise un accès ou "port" d'un dispositif de couplage. La fonction de couplage doit être ici comprise au sens large du terme. Elle a trait à des connexions simples entre deux ou plusieurs éléments de transmission, à des commutations, dérivations ou multiplexages de signaux optiques acheminés par les éléments de transmission.

Plus particulièrement, l'invention a trait à un dispositif pour coupler au moins un premier à des seconds éléments de transmission optique, comprenant une structure en sandwich composée d'une couche centrale pour acheminer des faisceaux lumineux entre les éléments de transmission optique, et de deux couches externes recouvrant les faces de la couche centrale pour guider les faisceaux lumineux, l'indice de réfraction de la couche centrale étant supérieur aux indices de réfraction des couches externes.

Un tel dispositif de couplage pour coupler au moins une fibre d'entrée à des fibres de sortie est illustré dans l'article paru dans APPLIED OPTICS, vol. 19, N° 21, 1 novembre 1980, pages 3588-3590, Optical Society of America; R. WATANABE et al. : "Slab waveguide demultiplexer for multimode optical transmission in the 1.0-1. 4-µm wavelength region", et dans l'article paru dans AGARD CONFERENCE PROCEEDINGS, Istanbul, 23-27 septembre 1985, N° 383, pages 11-1 - 11-8; V. RUSSO et al. : "A spherical waveguide multiplexer - demultiplexer". Dans ce dispositif de couplage, les faces extrêmes des fibres sont alignées devant un chant rectiligne de la structure en sandwich qui est plane et rigide. Un réseau de diffraction à traits (rainures) concave ou plan est rapporté, par exemple par ciment plastique, contre un chant de la structure opposé aux faces extrêmes des fibres.

Le signal lumineux sortant de la fibre d'entrée est confiné dans la couche centrale de la structure et est diffracté par le réseau de diffraction en direction des fibres de sortie. La direction de réflexion sur le réseau de diffraction dépend de la longueur d'onde, et par la suite le dispositif de couplage sert de multiplexeur ou de démultiplexeur de longueur d'onde.

Dans ce dispositif de couplage connu, le réseau de diffraction miniaturisé augmente le coût du dispositif, et la disposition des fibres optiques vers un même côté de la structure ne permet au dispositif de couplage d'être analogue à un connecteur de fibres classique pour lequel la fibre d'entrée est disposée à une extrémité du dispositif opposée à celle où est disposée au moins une fibre de sortie; cette disposition connue confère une continuité linéaire des lignes de transmission optique.

La présente invention vise à fournir un dispositif de couplage dans lequel le premier élément de transmission est sensiblement en regard des seconds éléments de transmission, et dont la structure est une structure optique intégrée où le couplage entre éléments ne fait pas appel à un réseau de diffraction.

A cette fin, un dispositif de couplage selon l'invention est tel que défini dans la revendication 1.

Selon une réalisation préférée parmi celles définies par les revendications 2 à 12, le miroir qui est petit par rapport au chant parabolique est totalement inclus dans la structure ou ménagé dans un chant sécant à l'axe du chant parabolique. Le miroir fait face au chant parabolique pour recevoir le faisceau divergeant. Le premier élément de transmission, tel que fibre optique, est par exemple logé dans une saignée de la structure traversant le chant parabolique, colinéaire à l'axe du chant parabolique et ayant un fond en regard dudit miroir, ou est relié au petit miroir par un guide optique convenable intégré à la structure.

Pour obtenir un joint optique tournant, la structure comporte au moins l'une des caractéristiques définies dans les revendications 13 à 18. La structure est conformée en une surface de révolution, de préférence cylindrique, autour d'un axe parallèle à l'axe du chant parabolique. Dans ce cas, soit un tambour tournant par rapport à la première structure supporte les seconds éléments de transmission en regard du chant sécant, soit une seconde structure analogue à la première et ayant un chant sécant en regard de celui de la première structure est montée tournante relativement à la première structure. En particulier, plusieurs joints tournants selon l'invention peuvent être disposés concentriquement à un axe de rotation.

Lorsque le dispositif de couplage est utilisé en multiplexeur-démultiplexeur, celui-ci comprend une pluralité de secondes structures en sandwich ayant des axes de chant parabolique parallèles à l'axe de chant parabolique de la première structure, et des chants sécants d'axes paraboliques respectifs qui sont alignés côte à côte en regard du chant sécant de la première structure. Pour un fonctionnement en démultiplexeur, les chants sécants des secondes structures sont revêtus respectivement de couches filtrantes gui correspondent à des longueurs d'onde différentes.

D'autres avantages et caractéristiques de l'invention apparaîtront plus clairement à la lecture de la description suivante de plusieurs réalisations préférées de l'invention en référence aux dessins annexés correspondants dans lesquels :
- la Fig. 1 est une vue en perspective arrachée d'une feuille à structure sandwich ;
- la Fig. 2 est une vue schématique en perspective d'un chant de structure en sandwich couplé à l'extrémité d'une fibre optique disposée devant une lentille intégrée à la structure ;
- la Fig. 3 est une vue en coupe diamétrale de la lentille, prise la long de la ligne III-III de la Fig. 2 ;
- la Fig. 4 est une vue schématique en perspective d'une structure en sandwich à chant réflecteur parabolique et à trou surfacique et miroir intégré selon l'invention ;
- la Fig. 5 est une vue schématique en perspective de la collimation de rayons lumineux dans un coupleur tournant de fibres optiques selon l'invention ;
- la Fig. 6 est une vue de dessus de la structure en sandwich développée ici sur un plan, formant un manchon dans le coupleur de la Fig. 5 ;
- la Fig. 7 est une vue de dessus détaillée de la structure en sandwich de la Fig. 6, au niveau d'une extrémité de première fibre optique et d'un miroir convexe ;
- la Fig. 8 est une vue schématique en perspective d'un multijoint optique tournant à plusieurs manchons concentriques ; et
- la Fig. 9 est une vue de dessus schématique d'un multiplexeur-démultiplexeur optique selon l'invention.

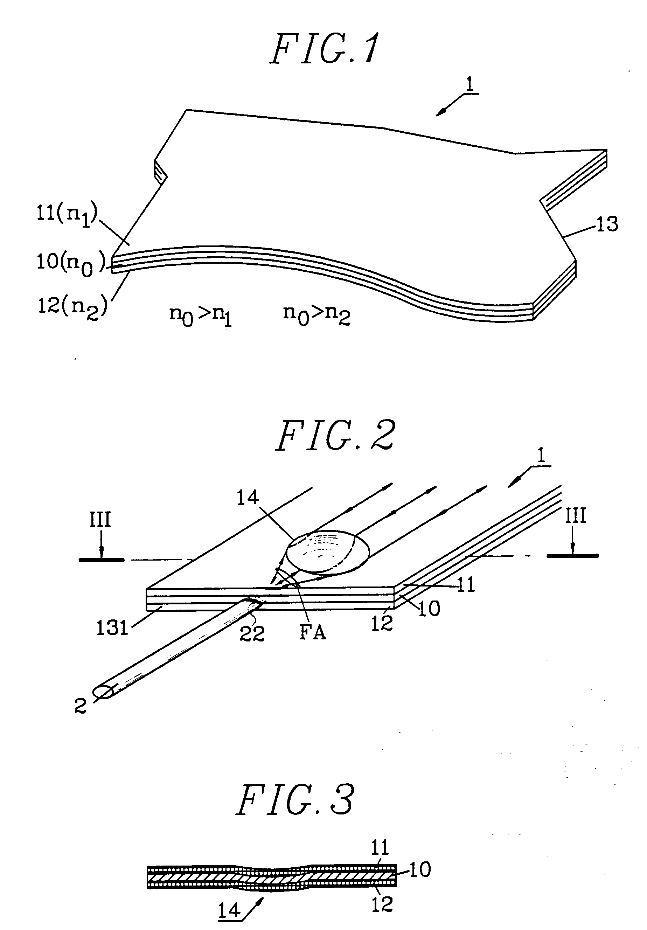

Un dispositif de couplage selon l'invention comporte, comme élément principal, au moins un guide optique ayant une structure mince en sandwich 1. Comme montré à la Fig. 1, cette structure comporte une couche centrale de transmission 10 en un premier matériau ayant un indice de réfraction n₀, et deux couches externes de guidage 11 et 12 qui recouvrent les faces de la couche centrale respectivement. Les couches 11 et 12 ont des indices de réfraction n₁ et n₂ qui peuvent être différents entre eux et qui sont différents de n₀. Il en est de même entre les épaisseurs des trois couches qui peuvent être différentes. En outre, la structure en sandwich 1 peut être sensiblement plane, ou peut se développer en une forme curviligne, par exemple suivant une surface de révolution, typiquement conique, ou de préférence cylindrique comme on le verra dans la suite.

Par analogie avec les fibres optiques, la couche centrale 10 est transparente pour acheminer des faisceaux lumineux, comme au coeur de fibre. Les couches externes 11 et 12 servent à réfléchir et guider les faisceaux lumineux, comme une gaine optique de fibre. L'indice n₀ de la couche centrale 10 est supérieur aux indices n₁ et n₂ qui peuvent être égaux ou différents. Toutefois, vue en coupe suivant l'épaisseur, la structure peut être du type à saut d'indice ou du type à gradient d'indice, comme dans une section diamétrale d'une fibre optique.

A titre d'exemple, la couche centrale 10 peut être à l'état solide. La structure offre un contour prédéterminé obtenu par usinage ou découpage; par exemple, la couche 10 est obtenue par alésage axial d'un cylindre plein. La couche centrale est par exemple en plexiglas (marque déposée), ou en verre à indice de réfraction constant ou variable suivant l'épaisseur, en résine synthétique, en matière plastique, en silice, etc. . . Les couches externes 11 et 12 peuvent être des couches métalliques, en silicone, en verre dopé, ou bien du gaz tel que l'air. Par exemple les couches 11 et 12 sont obtenues par dépôt sur les faces de la couche centrale, par électrolyse, ou en traitant ces faces par diffusion d'ions dans la couche centrale. La structure peut alors constituer une feuille mince souple qui est collée sur un support rigide de surface prédéterminée, par exemple cylindrique, ou bien être rigide et être conformée par déformation thermique ou par moulage en la surface prédéterminée.

Selon d'autres variantes, le couche centrale 10 peut être à l'état gazeux, tel qu'air ou vide, ou à l'état liquide, tel qu'eau. Par exemple, les couches externes peuvent être deux plaques superposées, planes ou conformées de la même façon dans un moule, et présentant deux grands évidements respectifs. Les évidements ont une hauteur uniforme dans l'épaisseur de plaque et un contour déterminé et s'étendent en regard parallèlement aux faces de plaque. Entre les évidements est confiné le gaz ou le liquide.

La structure en sandwich 1 a des dimensions finies et, en particulier, présente un contour 13, par exemple curviligne et/ou polyédrique, qui détermine une limite à la propagation d'un faisceau lumineux guidé entre les couches 11 et 12. En fonction de la forme du contour 13 de la structure 1, le faisceau lumineux peut diverger ou converger, et en fonction de l'état ponctuel du contour, le faisceau peut être réfléchi, être réfracté et sortir de la structure, ou entrer dans la structure. De même, en dépendance de la variation locale d'indice et/ou d'épaisseur dans au moins l'une des couches 10, 11 et 12, c'est-à-dire de traitement spécial dans un volume déterminé de la structure, tel que déformation, traitement de surface ou d'indice, métallisation ou non, le faisceau lumineux peut subir tout traitement optique connu, tel que focalisation, collimation, réflexion, réfraction, etc...

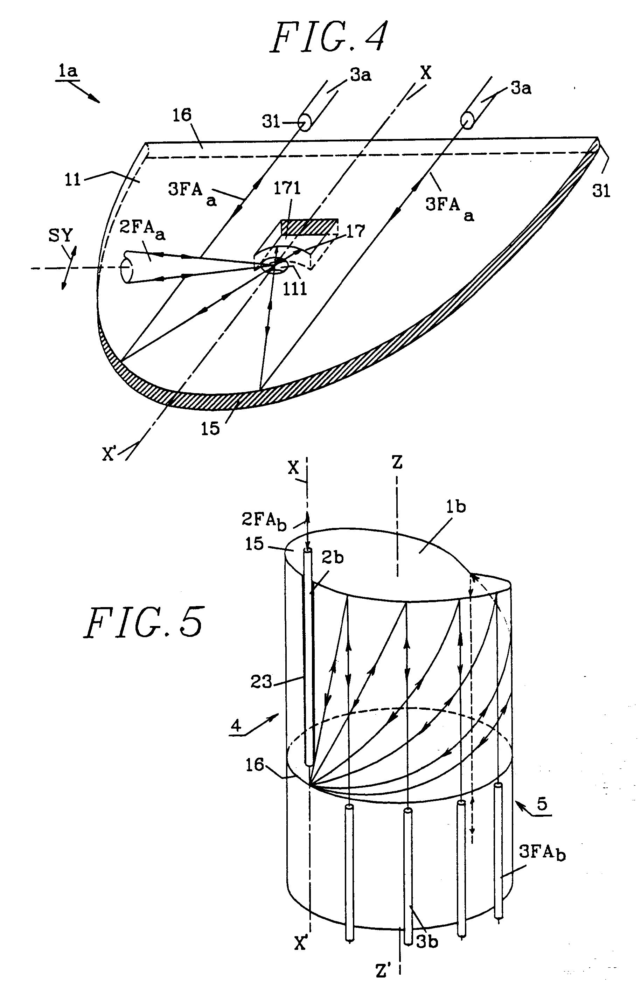

Par exemple, comme montré aux Figs. 2 et 3, en imprimant localement une dépression, en forme de calotte sphérique, sur l'une des faces de la structure 1, telle que la face 11, et donc une convexité sur l'autre face 12, la déformation à épaisseur sensiblement constante de la couche centrale 10 crée une lentille convergente 14, "géodésique" localement, afin de collimater un faisceau divergent FA, ou de converger un faisceau collimaté vers-une extrémité 22 de fibre 2. Pour obtenir un miroir, il suffit de métalliser une partie du contour de la structure, comme montré en 15 à la Fig. 4.

Le dispositif de couplage selon l'invention est destiné à coupler au moins un premier élément de transmission optique à au moins un second élément de transmission optique. On notera que si la structure en sandwich ne couple qu'un premier élément de transmission optique à un seul second élément de transmission optique, le dispositif de couplage assure une fonction équivalente à celle d'un connecteur simple. Au sens de la présente invention, un "élément de transmission optique" est un élément connu qui propage un faisceau lumineux qui peut être en lumière blanche, ou a une ou plusieurs longueurs d'onde. Certains de ces éléments, comme il est connu, sont unidirectionnels ou bidirectionnels, et en vertu du principe de la réciprocité des directions en optique, géométrique, les exemples ci-dessous sont décrits pour un seul sens de transmission, généralement d'un premier élément 2 vers au moins un second élément 3. Le double sens est symbolisé par une double flèche sur les rayons lumineux dans les figures. Dans la suite, on se réfèrera particulièrement à des fibres optiques, en tant qu'éléments de transmission optique, bien que ceux-ci puissent être des éléments photoémetteurs, tels que diode LED ou diodes laser, des éléments photorécepteurs, tels que diode PIN, des éléments d'optique simples tels que lentilles, filtres, objectifs, séparateurs, prismes, collimateurs, ou des bornes d'accès ou ports de coupleurs ou systèmes ou réseaux optiques connus.

Le couplage de l'un de ces divers éléments de transmission optique avec la structure en sandwich s'effectue en général en faisant appel aux techniques déjà connues pour coupler un tel élément avec une fibre optique, afin d'injecter dans la couche centrale 10 ou de transmettre à partir de celle-ci un faisceau lumineux convenable, selon le cas.

En référence à la Fig. 2, un élément optique de transmission est une fibre optique 2 à l'une des extrémités de laquelle le coeur de fibre a son axe disposé, de préférence, dans le plan médian de la couche centrale 10. Lorsque la face 22 de l'extrémité de la libre 2 est convenablement arasée, cette face peut être appliquée contre un chant plat 131 de la couche principale 10, le cas échéant, à travers un gel ou col le de continuité d'indice de réfraction. Toutefois, lorsque le diamètre de coeur de la fibre 2 et l'épaisseur de la couche 10 de la structure en sandwich 1 sont différents, la plus grande des deux dimensions précédentes peut être réduite par sensible étirage à chaud. La face extrême 22 de la libre peut être fusionnée localement avec le chant 131 de la structure 1 ou peut être couplé au chant 131 par un gel de continuité d'indice, ou par plusieurs couches antireflets dont les indices sont graduels entre les indices du coeur de fibre et de la couche centrale de structure.

Si un faisceau lumineux est injecté dans l'autre extrémité de la fibre 2, le faisceau FA diverge en sortant de la face extrême 22 et en traversant le chant de structure 131. Dans le sens contraire, structure 1 vers fibre 2, si l'on désire recueillir toute la puissance du faisceau dans la fibre, il est nécessaire de prévoir une lentille convergente géodésique 14 axée sur la fibre 2, ou autre système optique, de préférence intégré à la structure.

Selon une réalisation montrée à la Fig. 4, un faisceau incident 2FAa est focalisé vers un petit trou 111, assimilable à un point, pratiqué dans l'une, 11, des couches externes d'une structure sandwich la selon l'invention. Selon une autre variante, le trou 111 est remplacé par une petite surface externe circulaire de la couche 11 qui a été dépolie, ou par un réseau de diffraction à traits (petites rainures). L'axe du faisceau 2FAa est incliné par rapport à la structure la, ici plane, et le faisceau est transmis par un système optique de lentille SY par exemple. Le faisceau lumineux 2FAa est alors réfléchi par la face interne de l'autre couche externe 12 et est diffusé à l'intérieur de la structure 1a, dans la couche centrale 10. La collimation du faisceau diffusé est alors obtenue grâce à un chant 15 de la structure la découpé ou usiné en parabole et métallisé. Le chant 15 constitue un miroir parabolique ayant pour foyer f sensiblement le centre du trou 111. Ainsi le faisceau 2FAa pénétrant dans la structure la est collimaté parallèlement à l'axe X′X du chant parabolique 15 et peut être divisé en des petits faisceaux lumineux 3FAa récupérés dans des fibres optiques 3a, en tant que seconds éléments de transmission optique. Des faces extrêmes 31 des fibres 3a sont appliquées contre un chant arrière 16 de la structure 1a, sécant à l'axe X′X du chant parabolique 15, par exemple perpendiculaire à celui-ci selon la Fig. 4.

De préférence, un petit miroir concave 17, typiquement cylindrique, est intégré dans la structure 1a et donc dans la couche 10, sensiblement en arrière du foyer du chant parabolique 15. Le miroir 17 masque sensiblement le miroir parabolique 15 et renvoie vers celui-ci les rayons du faisceau 2FAa perdus vers l'arrière de la structure 1a. Le petit miroir 17 peut être obtenu en ménageant une petite cavité 171 dans la structure la dont l'un des côtés est convexe, et en métallisant ce côté convexe.

Selon d'autres variantes, une ou plusieurs des secondes fibres 3a (Fig. 4), 3b (Fig. 5) sont associées à un système micro-optique de collimation disposé devant le chant 16 du manchon 4. Le chant arrière 16 peut présenter un profil transversal convexe, sensiblement cylindrique afin d'éviter une diffusion par dessus et par dessous la structure lorsque le faisceau 3FAa (Fig. 4), 3FAb (Fig. 5) sort de celle-ci, et donc afin de collimater celui-ci suivant la "surface" de la structure.

Une structure en sandwich 1b analogue à celle la de la Fig. 4, mais sans trou au foyer, est utilisée pour former un manchon d'un coupleur optique tournant selon l'invention. La structure 1b épouse une surface de révolution, par exemple cylindrique, pour former un manchon ou une bague 4 ayant un axe Z′Z parallèle à l'axe X′X du chant parabolique 15, comme montré à la Fig. 5. Le chant 16 délimite une section de manchon ici circulaire, de préférence perpendiculaire à l'axe de rotation Z′Z. Un faisceau lumineux 2FAb est injecté (ou extrait) dans la structure 1b au moyen d'une première fibre optique 2b dont l'extrémité est colinéaire à l'axe X′X. Après réflexion devant le foyer f, le faisceau 2FAb diverge vers le chant parabolique 15 et est collimaté en plusieurs petits faisceaux 3FAb traversant des fenêtres exposant la couche centrale 10 et recueillis dans des extrémités de secondes fibres optiques 3b, respectivement. Les extrémités des fibres 3b sont maintenues sur un tambour 5 en regard du chant sécant 16. Le manchon 4 formé par la structure 1b, ou sur lequel est fixée celle-ci, et le tambour 5 sont montés, l'un tournant autour de l'axe Z′Z, et l'autre fixe en rotation.

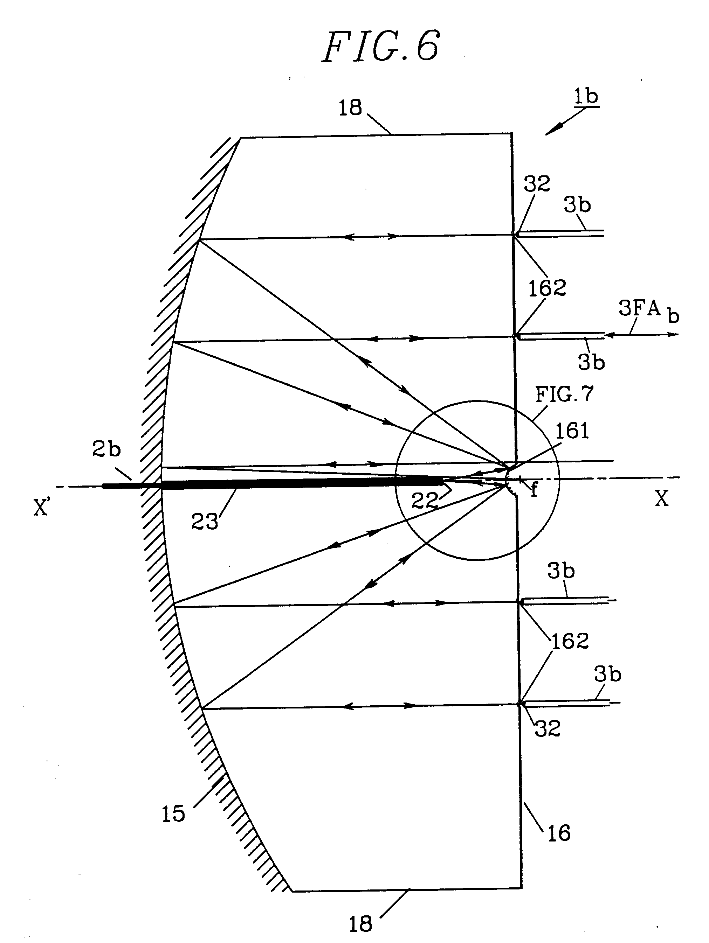

Pour obtenir le manchon 4 montré à la Fig. 5, la structure 1b est de préférence rigide et obtenue par alésage axial dans un cylindre plein en verre ou plexiglas, les chants 15 et 16 résultant d'un usinage. Selon d'autres variantes, la structure 1b est découpée ou obtenue par usinage dans une feuille selon le profil de la Fig. 6, ou biens est conformée cylindriquement avec le contour adéquat par moulage.

Selon la Fig. 6, la structure 1b comprend un chant long métallisé et parabolique 15 de foyer f, un chant long 16 perpendiculaire à l'axe de parabole X′X, et deux chants latéraux courts 18, ici parallèles à l'axe X′X. Les chants 18 sont de préférence entièrement opaques, tandis que le chant arrière 16 est totalement transparent, ou selon la Fig. 6 est partiellement opaque et offre des petites fenêtres transparentes 162 vers lesquelles les extrémités des fibres 3b sont dirigées. Le chant 16 a un profil transversal, pris suivant un plan perpendiculaire à la structure, qui est de préférence convexe, comme déjà dit à propos de la structure 1a.

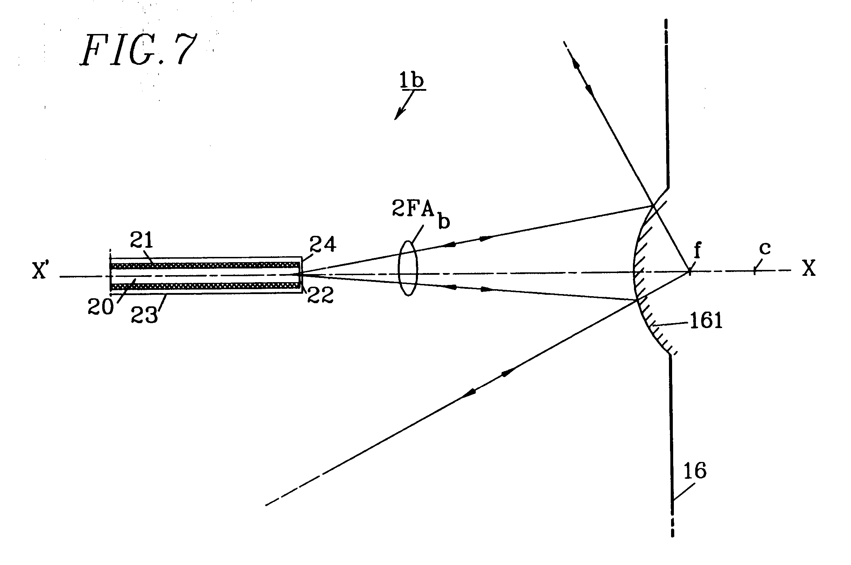

En référence aux Figs. 6 et 7, la première fibre 2b est introduite dans une saignée 23 pratiquée colinéairement à l'axe X′X dans la structure 1b et sensiblement jusqu'à proximité du foyer f. L'indice de réfraction du coeur 20 de la fibre 2b comme celui des secondes fibres 3b est sensiblement égal à l'indice de réfraction n₀ de la couche centrale 10. La face extrême 22 de la fibre 2b est aboutée au fond 24 de la saignée 23, de préférence par un fluide d'adaptation d'indice, ou une colle d'indice adapté, ou des couches antireflets, ou encore par fusion. Le cas échéant, la gaine optique 21 de la fibre 2b, ou le revêtement de protection de la fibre est collé au moins en partie aux parois de la saignée 23.

Il est à noter que les extrémités des secondes fibres optiques 3a, 3b peuvent être liées à la structure 1a, 1b (Figs. 4, 6), comme la liaison entre la fibre 2b et la structure 1b.

Selon d'autres variantes, la saignée 23 peut être remplacée par un guide optique intégré à la structure 1b et sensiblement coaxial à l'axe de parabole X′X. Dans ce cas, l'extrémité 22 de la fibre 2b est positionnée devant le chant parabolique 15, en regard du guide optique. Ledit guide optique peut être formé par :
- une saignée ou un trou borgne analogue à la saignée 23 dont deux parois transversales à la couche centrale 10 sont métallisées et donc réfléchissantes, et dont deux autres parois, inférieure et supérieure, sont constituées par les couches externes 11 et 12 ou par deux revêtements non transparents ; ou
- une portion longiligne 23 de la structure 1b qui est délimitée par deux minces saignées ou traits de scie sensiblement parallèles à l'axe X′X ; ou
- une portion longiligne 23 de la structure 1b occupant un emplacement analogue à la saignée 23 et ayant reçu des ions par dopage.

Le faisceau 2FAb guidé dans la fibre 2b, lorsque celle-ci est une fibre d'entrée du dispositif de couplage, diverge de la face extrême 22b.

Un petit miroir cylindrique convexe 161 est prévu entre le foyer f du chant parabolique 15 et le fond de saignée 24, et au voisinage du foyer f. Le rayon du miroir 161 est plus grand que la distance entre le centre C du miroir 161 et le foyer f, afin d'obtenir une convexité relativement grande. Tous les rayons du faisceau incident 2FAb sont réfléchis par le miroir 161 en des rayons semblant alors être issus du foyer f. Ils sont ensuite réfléchis par le chant métallisé 15 en des rayons parallèles à l'axe XX′. Comme montré à la Fig. 7, le miroir 161 résulte d'une concavité sensiblement cylindrique qui est ménagée au centre du chant arrière 16 et qui est métallisée.

En se référant à nouveau à la Fig. 6, il apparaît que des fenêtres 162 sont prévues dans le chant arrière 16 pour y positionner, et, le cas échéant, y fixer des extrémités 32 de secondes fibres optiques 3b, d'une manière analogue à la fixation de la première fibre 2b dans la saignée 23. Toutefois, les fenêtres 162 peuvent être pratiquées dans l'une ou les deux couches externes 11 et 12 de la structure 1b, comme le trou 111 ou la surface dépolie dans la couche 11 (Fig. 4). Les fenêtres 162 reçoivent de préférence un traitement optique approprié, ou sont recouvertes d'un fluide d'indice choisi pour limiter les réflexions parasites de Fresnel.

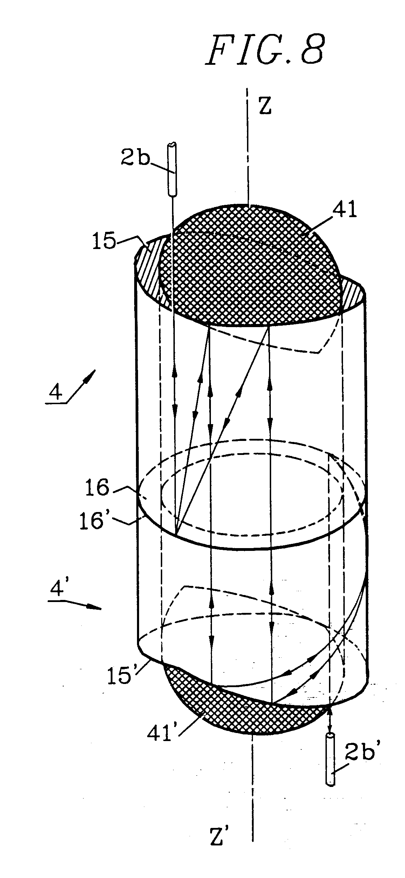

A la place du tambour 5 supportant les secondes fibres optiques 3b est prévu un autre manchon 4′ qui est analogue au manchon 4 et disposé tête-bêche par rapport à ce dernier, selon la variante illustrée à la Fig. 8. L'un, 4, des manchons est monté tournant autour de l'axe commun Z′Z des manchons, tandis que l'autre, 4′, est fixe en rotation. Les chants transparents circulaires à prof il transversal convexe 16 et 16′ des deux manchons 4 et 4′ sont en regard. Dans ce cas, le fonctionnement du "joint optique tournant" ainsi formé est réversible entre une fibre 2b alignée sur l'axe de parabole du premier manchon 4 et une fibre 2b′ alignée sur l'axe de parabole du second manchon 4′. Toute l'énergie lumineuse transmise par l'une des fibres 2b, 2b′ est pratiquement recueillie par l'autre fibre, malgré la rotation possible dans n'importe quel sens d'un manchon par rapport à l'autre et le désallignement des fibres.

Grâce aux propriétés des paraboles, les chemins optiques suivis par les rayons lumineux entre les fibres 2b et 2b′ sont de longueur sensiblement constante au cours de la rotation, ce qui évite tout déphasage périodique entre rayons.

Un joint optique selon l'invention peut comporter plusieurs "bagues"' concentriques, constituées chacune par une paire de manchons identiques de même diamètre, analogues à la paire 4-4′. Deux telles paires de manchon 4-4′, 41-41′ sont montrées à la Fig. 8. Dans ce cas, un décalage angulaire du sommet parabolique d'un manchon 4, 4′ par rapport au(x) sommet(s) du ou des deux manchons concentriques voisins 41, 41′, permet de loger un connecteur fibre-à-fibre sensiblement au sommet du chant parabolique 15.

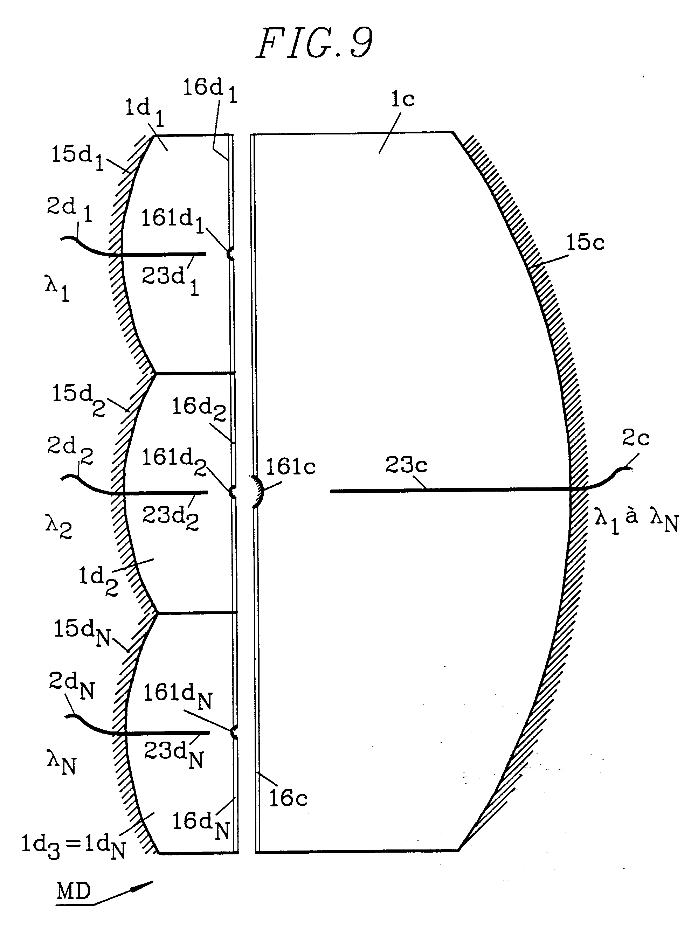

En référence à la Fig. 9, un dispositif de multiplexage-démultiplexage MD de longueurs d'onde comprend une première structure en sandwich 1c, et N secondes petites structures en sandwich 1d₁ à 1d_{N}, ici au nombre de trois. Ces N+1 structures sont analogues à la structure plane 1b déjà décrite en référence à la Fig. 6, à l'exception que les chants rectilignes à profil transversal convexe 16c, 16d₁ à 16d_{N} de celles-ci ne comportent pas de fenêtre. Ainsi, les structures 1c, 1d₁ à 1d_{N} sont par exemple découpées ou usinées dans une même feuille à couches 10, 11 et 12 et comprennent chacune un chant réflecteur parabolique 15c, 15d₁ à 15d_{N}, un chant 16c, 16d₁ à 16d_{N} sécant et de préférence perpendiculaire à l'axe de chant de parabole, un petit miroir convexe 161_{c}, 161d₁ à 161d_{N} central au chant sécant, et un guide optique tel qu'une saignée axiale 23c, 23d₁ à 23d_{N}. La saignée 23c de la structure 1c contient l'extrémité d'une première fibre optique 2c, tandis que les saignées 23d₁ à 23d_{N} des structures 1d₁ à 1d_{N} contiennent des extrémités de secondes fibres optiques 2d₁ à 2d_{N} respectivement.

Les chants rectilignes 16d₁ à 16d_{N} sont alignés parallèlement et en regard du chant rectiligne 16c. De préférence, la somme des longueurs des chants 16d₁ à 16d_{N} est égale à la longueur du chant 16c. Le chant 16c de la première structure en sandwich a reçu au moins une couche antireflet à large bande, ou est immergée dans un fluide d'indice adéquat. Les chants 16d₁ à 16d_{N} des secondes structures en sandwich ont reçu des couches de filtrage à bande étroite correspondant respectivement à des longueurs d'onde λ₁ à λ_{N}.

Lorsque le dispositif MD est seulement utilisé en multiplexeur de N signaux d'entrée à longueurs d'onde individuelles λ₁ à λ_{N} en un signal de sortie à N longueurs d'onde multiplexées, c'est-à-dire pour une transmission des secondes fibres vers la première fibre, les couches de filtrage sur les chants 16d₁ à 16d_{N} peuvent être supprimées. Toujours en l'absence de couche filtrante à bande étroite, le dispositif MD utilisé dans l'autre sens de transmission, de la fibre 2c vers la fibre 2d₁ à 2d_{N}, est utilisé en coupleur-dérivateur.

Pour une utilisation du dispositif MD en démultiplexeur, et donc avec les couches filtrantes, la puissance du signal entrant à longueurs d'onde multiplexées dans la fibre 2c est répartie dans les secondes fibres 2d₁ à 2d_{N}.

La structure 1c et l'ensemble des structures 1d₁ à 1d_{N} sont, selon une autre variante, conformés en surfaces de révolution coaxiales dont l'une est montée tournante, afin de réaliser un joint tournant de multiplexage-démultiplexage analogue au joint tournant montré à la Fig. 5.

## Revendications

1. Dispositif pour coupler au moins un premier à des seconds éléments de transmission optique (2,3), comprenant une structure en sandwich (1) composée d'une couche centrale (10) pour acheminer des faisceaux lumineux entre les éléments de transmission optique (2, 3), et de deux couches externes (11, 12) recouvrant les faces de la couche centrale pour guider les faisceaux lumineux, l'indice de réfraction (n₀) de la couche centrale (10) étant supérieur aux indices de réfraction (n₁, n₂) des couches externes (11, 12), caractérisé par un miroir (17, 161) intégré dans la structure (1a, 1b) et disposé sensiblement en regard du premier élément de transmission optique (SY, 2b), et par un chant parabolique réflecteur (15) sur le pourtour de la structure (1a, 1b) ayant un foyer à proximité dudit miroir et disposé en regard des seconds éléments de transmission optique (3a, 3b) ledit miroir (17, 161) étant disposé pour renvoyer un faisceau lumineux dudit premier élément de transmission optique (5Y, 2b) vers ledit chant parabolique (15).

2. Dispositif conforme à la revendication 1, caractérisé par un trou ou une portion superficielle dépolie (111) pratiqué dans l'une (11) des couches externes au voisinage du foyer (f) du chant parabolique pour être traversé par un faisceau lumineux (2FAa) du premier élément de transmission (SY) guidé dans la structure (1a) et collimaté par le chant réflecteur (15), ledit miroir (17) étant concave et disposé au voisinage dudit trou (111) pour renvoyer des rayons diffusés dudit faisceau (2FAa) vers ledit chant parabolique (15).

3. Dispositif conforme à la revendication 1, caractérisé en ce que ledit miroir (161) est convexe, sensiblement centré sur l'axe (X'X) du chant parabolique, et disposé à proximité du foyer (f) du chant parabolique (15), entre le foyer (f) et ledit premier élément de transmission (2b).

4. Dispositif conforme à la revendication 3, caractérisé par une saignée (23) traversant le chant parabolique (15), colinéaire à l'axe (X'X) du chant parabolique, et ayant un fond (24) en regard dudit miroir (161) pour recevoir une extrémité (22) dudit premier élément de transmission optique (2b).

5. Dispositif conforme à la revendication 3 ou 4, caractérisé par un guide optique sensiblement coaxial à l'axe (X'X) du chant parabolique (15) et intégré dans ladite structure pour guider un faisceau lumineux entre le premier élément de transmission optique (2b) et ledit miroir (161).

6. Dispositif conforme à la revendication 5, caractérisé en ce que le guide optique est formé par une saignée ou un trou borgne (23) ménagé dans la structure (1b) et ayant des parois réfléchissantes.

7. Dispositif conforme à la revendication 5, caractérisé en ce que le guide optique est formé par une portion longiligne (23) de la structure délimitée par deux minces saignées sensiblement parallèles à l'axe (X'X) du chant parabolique (15).

8. Dispositif conforme à la revendication 5, caractérisé en ce que le guide optique est obtenu par dopage ionique dans une portion longiligne (23) de la structure.

9. Dispositif conforme à l'une quelconque des revendications 1 à 8, caractérisé en ce que la structure (1b) comporte un chant (16) sécant à l'axe (X'X) du chant parabolique (15), de préférence perpendiculaire à celui-ci, à proximité desquels sont disposés les seconds éléments de transmission (3a, 3b).

10. Dispositif conforme à la revendication 9, caractérisé en ce que ledit chant sécant (16) comporte des moyens de collimation, tels qu'un profil transversal convexe dudit chant sécant.

11. Dispositif conforme à la revendication 9 ou 10, caractérisé en ce que le chant sécant (16) comporte des fenétres (162) de la couche centrale (10) pour y positionner des extrémités (32) des seconds éléments de transmission optique (3b).

12. Dispositif conforme à l'une quelconque des revendications 3 à 8 et à l'une quelconque des revendications 9 à 11, caractérisé en ce que le miroir convexe (161) est une concavité réflectrice pratiquée dans ledit chant sécant (16).

13. Dispositif conforme à l'une quelconque des revendications, 1 à 12, caractérisé en ce que la structure (1a, 1b) est souple et épouse une surface prédéterminée, de préférence cylindrique.

14. Dispositif conforme à l'une quelconque des revendications 1 à 13, caractérisé en ce que ladite structure (1b) épouse une surface de révolution (4), de préférence cylindrique, autour d'un axe (Z'Z) parallèle à l'axe (X'X) du chant parabolique (15).

15. Dispositif conforme à la revendication 14, caractérisé en ce qu'il comprend des moyens (5) pour supporter des seconds éléments de transmission (2b) en regard d'un chant (16) de la structure (1b) sécant à l'axe (X',X) du chant parabolique (15), de préférence perpendiculaire à celui-ci.

16. Dispositif conforme à la revendication 15, caractérisé en ce que ladite structure (1b) et lesdits moyens pour supporter (5) sont l'un tournant en rotation autour de l'axe (Z'Z) de la surface de révolution et l'autre fixe.

17. Dispositif conforme à la revendication 15 ou 16, caractérisé en ce que lesdits moyens pour supporter (5) sont une seconde structure en sandwich épousant une surface de révolution (4'), ayant le même axe (Z'Z) que la première structure, et un chant sécant (16') en regard de celui (16) de la première structure.

18. Dispositif conforme à la revendication 17, caractérisé par plusieurs paires de première et seconde structures (4, 4' ; 41, 41') qui sont concentriques à un même axe (Z'Z) de surface de révolution.

19. Dispositif conforme à l'une quelconque des revendications 1 à 18, caractérisé en ce qu'il comprend une pluralité (N) de secondes structures en sandwich (1d₁ à 1d_{N}) ayant des chants paraboliques (15d₁ à 15d_{N}) avec des axes de chant parabolique parallèles à l'axe de chant parabolique de la première structure (1c), et des chants (16d₁ à 16d_{N}) qui sont sécants aux axes de chant parabolique respectifs et qui sont alignés côte à côte en regard d'un chant sécant (16c) de la première structure.

20. Dispositif conforme à la revendication 19, caractérisé en ce que le chant sécant (16c) de la première structure (1c) est revêtu d'au moins une couche antireflet.

21. Dispositif conforme à la revendication 19 ou 20, caractérisé en ce que les chants sécants (16d₁ à 16d_{N}) des secondes structures (1d₁ à 1d_{N}) sont revêtus respectivement de couches filtrantes qui correspondent à des longueurs d'onde différentes.

## Patentansprüche

1. Vorrichtung zum Koppeln wenigstens eines ersten mit zweiten optischen Übertragungselementen (2, 3), umfassend eine Sandwichanordnung (1), bestehend aus einer Mittelschicht (10) zum Leiten der Lichtbündel zwischen den optischen Übertragungselementen (2, 3) und zwei Außenschichten (11, 12), die die Seiten der Mittelschicht überdecken, um die Lichtbündel zu führen, wobei der Brechungsindex (nₒ) der Mittelschicht (10) größer als die Brechungsindizes (n₁, n₂) der Außenschichten (11, 12) ist, **gekennzeich****net** durch einen Spiegel (17, 161), der in die Anordnung (1a, 1b) integriert ist und etwa gegenüber dem ersten optischen Übertragungselement (SY, 2b) angeordnet ist, und durch eine reflektierende parabolische Kante (15) auf dem Außenumfang der Anordnung (1a, 1b), die einen Brennpunkt in der Nähe des Spiegels aufweist und gegenüber den zweiten optischen Übertragungselementen (3a, 3b) angeordnet ist, wobei der Spiegel (17, 161) angeordnet ist, um ein Lichtbündel des ersten optischen Übertragungselementes (SY, 2b) zur parabolischen Kante (15) hin zurückzustrahlen.

2. Vorrichtung nach Anspruch 1, **gekennzeich****net** durch ein Loch oder einen mattierten Oberflächenabschnitt (111), der in der einen (11) der Außenschichten in der Nähe des Brennpunktes (f) der parabolischen Kante hergestellt ist, um durch ein Lichtbündel (2FAa) des ersten Übertragungselementes (SY) durchquert zu werden, das in der Anordnung (1a) geführt ist und durch die reflektierende Kante (15) kollimiert wird, wobei der Spiegel (17) konkav ist und in der Nähe des Lochs (111) angeordnet ist, um zerstreute Strahlen des Bündels (2FAa) zur parabolischen Kante (15) zurückzustrahlen.

3. Vorrichtung nach Anspruch 1, dadurch **gekenn****zeichnet**, daß der Spiegel (161) konvex, deutlich auf die Achse (X'X) der parabolischen Kante zentriert und in der Nähe des Brennpunktes (f) der parabolischen Kante (15) zwischen dem Brennpunkt (f) und dem ersten Übertragungselement (2b) angeordnet ist.

4. Vorrichtung nach Anspruch 3, **gekennzeichnet** durch einen Schlitz (23), der die parabolische Kante (15) kollinear zur Achse (X'X) der parabolischen Kante durchquert und einen Boden (24) gegenüber dem Spiegel (161) aufweist, um ein Ende (22) des ersten optischen Übertragungselementes (2b) aufzunehmen.

5. Vorrichtung nach Anspruch 3 oder 4, **gekennzeichnet** durch eine optische Führung etwa koaxial zur Achse (X'X) der parabolischen Kante (15) und integriert in die Anordnung, um ein Lichtbündel zwischen dem ersten optischen Übertragungselement (2b) und dem Spiegel (161) zu führen.

6. Vorrichtung nach Anspruch 5, dadurch **gekennzeichnet**, daß die optische Führung durch einen Schlitz oder ein Sackloch (23) gebildet ist, das in der Anordnung (1b) vorgesehen ist und reflektierende Wände aufweist.

7. Vorrichtung nach Anspruch 5, dadurch **gekennzeichnet**, daß die optische Führung durch einen langgliedrigen Abschnitt (23) der Anordnung gebildet ist, der durch zwei etwa zur Achse (X'X) der parabolischen Kante (15) parallele kleine Schlitze begrenzt ist.

8. Vorrichtung nach Anspruch 5, dadurch **gekenn****zeichnet,** daß die optische Führung durch Ionendotierung in einem langgliedrigen Abschnitt (23) der Anordnung erhalten wird.

9. Vorrichtung nach einem beliebigen der Ansprüche 1 bis 8, dadurch **gekennzeichnet**, daß die Anordnung (1b) eine Kante (16) umfaßt, die die Achse (X'X) der parabolischen Kante (15), vorzugsweise senkrecht zu dieser, schneidet, in deren Nähe die zweiten Übertragungselemente (3a, 3b) angeordnet sind.

10. Vorrichtung nach Anspruch 9, dadurch **gekenn****zeichnet**, daß die Schneidekante (16) Kollimierungsmittel wie ein konvexes Querprofil der schneidenden Kante umfaßt.

11. Vorrichtung nach Anspruch 9 oder 10, dadurch **ge****kennzeichnet**, daß die schneidende Kante (16) Fenster (162) der Mittelschicht (10) umfaßt, um dort Enden (32) der zweiten optischen Übertragungselemente (3b) zu positionieren.

12. Vorrichtung nach einem beliebigen der Ansprüche 3 bis 8 und nach einem beliebigen der Ansprüche 9 bis 11, dadurch **gekennzeichnet**, daß der konvexe Spiegel (161) eine reflektierende Konkavität ist, die in der schneidenden Kante (16) ausgeführt ist.

13. Vorrichtung nach einem beliebigen der Ansprüche 1 bis 12, dadurch **gekennzeichnet**, daß die Anordnung (1a, 1b) elastisch und an eine vorbestimmte, vorzugsweise zylindrische Fläche angeschmiegt ist.

14. Vorrichtung nach einem beliebigen der Ansprüche 1 bis 13, dadurch **gekennzeichnet**, daß sich die Anordnung (1b) an eine vorzugsweise zylindrische Rotationsfläche (4) um eine Achse (Z'Z) parallel zur Achse (X'X) der parabolischen Kante (15) anschmiegt.

15. Vorrichtung nach Anspruch 14, dadurch **gekenn****zeichnet**, daß sie Mittel (5) aufweist, um die zweiten Übertragungselemente 2b gegenüber einer sich mit der Achse (X'X) der parabolischen Kante (15), vorzugsweise senkrecht zu dieser, schneidenden Kante (16) der Anordnung (1b) abzustützen.

16. Vorrichtung nach Anspruch 15, dadurch **gekenn****zeichnet**, daß von der Anordnung (1b) und den Elementen zum Abstützen (5) das eine sich um die Achse (Z'Z) der Rotationsfläche rotierend dreht und das andere feststehend ist.

17. Vorrichtung nach Anspruch 15 oder 16, dadurch **ge****kennzeichnet,** daß die Mittel zum Abstützen (5) eine zweite Sandwichanordnung sind, die sich an einer Rotationsfläche (4') anschmiegt, die dieselbe Achse (Z'Z) wie die erste Anordnung aufweist, und eine schneidende Kante (16') gegenüber derjenigen (16) der ersten Anordnung.

18. Vorrichtung nach Anpruch 17, **gekennzeich****net** durch mehrere Paare erster und zweiter Anordnungen (4, 4'; 41, 41'), die zu einer selben Rotationsflächenachse (Z'Z) konzentrisch sind.

19. Vorrichtung nach einem beliebigen der Ansprüche 1 bis 18, dadurch **gekennzeichnet**, daß sie eine Anzahl (N) zweiter Sandwichanordnungen (1d₁ bis 1d_{N}) aufweist, die parabolische Kanten (15d₁ bis 15d_{N}) mit parabolischen Kantenachsen parallel zur parabolischen Kantenachse der ersten Anordnung (1c) und Kanten (16d₁ bis 16d_{N}) aufweisen, die sich mit den jeweiligen parabolischen Kantenachsen schneiden und die Seite an Seite gegenüber einer schneidenden Kante (16c) der ersten Anordnung ausgerichtet sind.

20. Vorrichtung nach Anspruch 19, dadurch **gekenn****zeichnet**, daß die schneidende Kante (16c) der ersten Anordnung (1c) mit wenigstens einer entspiegelten Schicht beschichtet ist.

21. Vorrichtung nach Anspruch 19 oder 20, dadurch **ge****kennzeichnet,** daß die schneidenden Kanten (16d₁ bis 16d_{N}) der zweiten Anordnungen (1d₁ bis 1d_{N}) jeweils mit filternden Schichten beschichtet sind, die verschiedenen Wellenlängen entsprechen.

## Claims

1. Device for coupling at least a first optical transmission element to second optical transmission elements (2, 3), comprising a sandwich structure (1) made up of a central layer (10) for directing light beams between the optical transmission elements (2, 3) and two outer layers (11, 12) covering the surfaces of the central layer for guiding the light beams, the refractive index (n₀) of the central layer (10) being greater than the refractive indices (n₁, n₂) of the outer layers (11, 12), characterised by a mirror (17, 161) integrated in the structure (1a, 1b) and arranged substantially opposite the first optical transmission element (SY, 2b), and by a reflective parabolic edge (15) on the periphery of the structure (1a, 1b) having a focus close to said mirror and arranged opposite said second optical transmission elements (3a, 3b), the said mirror (17, 161) being arranged so as to reflect a light beam from said first optical transmission element (SY, 2b) towards said parabolic edge (15).

2. Device according to claim 1, characterised by a hole or a roughened surface portion (111) formed in one (11) of the outer layers in the vicinity of the focus (f) of the parabolic edge in order to allow a light beam (2FAa) of said first transmission element (SY) to pass through it, guided in the structure (1a) and collimated by the reflective edge (15), said mirror (17) being concave and arranged in the vicinity of said hole (111) in order to pass the diffused rays from said beam (2FAa) towards said parabolic edge (15).

3. Device according to claim 1, characterised in that said mirror (161) is convex, substantially centred on the axis (X'X) of the parabolic edge, and arranged close to the focus (f) of the parabolic edge (15), between the focus (f) and said first transmission element (2b).

4. Device according to claim 3, characterised by a groove (23) passing through the parabolic edge (15), colinear with the axis (X'X) of the parabolic edge, and having a base (24) opposite said mirror (161) in order to receive one end (22) of said first optical transmission element (2b).

5. Device according to claim 3 or 4, characterised by an optical guide substantially coaxial with the axis (X'X) of the parabolic edge (15) and integrated into said structure in order to guide a light beam between the first optical transmission element (2b) and said mirror (161).

6. Device according to claim 5, characterised in that the optical guide is formed by a groove or a blind bore (23) formed in the structure (1b) and having reflective walls.

7. Device according to claim 5, characterised in that the optical guide is formed by a lengthy portion (23) of the structure defined by two thin grooves substantially parallel to the axis (X'X) of the parabolic edge (15).

8. Device according to claim 5, characterised in that the optical guide is obtained by ion doping in a lengthy portion (23) of the structure.

9. Device according to any of claims 1 to 8, characterised in that the structure (1b) has an edge (16) secant to the axis (X'X) of the parabolic edge (15), preferably perpendicular thereto, close to which are arranged the second transmission elements (3a, 3b).

10. Device according to claim 9, characterised in that the secant edge (16) comprises collimating means such as a convex transverse profile of said secant edge.

11. Device according to claim 9 or 10, characterised in that the secant edge (16) has apertures (162) of the central layer (10) for positioning the edges (32) of the second optical transmission elements (3b).

12. Device according to any one of claims 3 to 8 and any one of claims 9 to 11, characterised in that the convex mirror (161) is a reflective concavity formed in said secant edge (16).

13. Device according to any one of claims 1 to 12, characterised in that the structure (1a, 1b) is flexible and fits closely against a predetermined surface, preferably a cylindrical surface.

14. Device according to any one of claims 1 to 13, characterised in that said structure (1b) fits closely over a rotational surface of revolution (4), preferably a cylindrical surface, about an axis (Z'Z) parallel to the axis (X'X) of the parabolic edge (15).

15. Device according to claim 14, characterised in that it comprises means (5) for supporting the second transmission elements (2b) opposite an edge (16) of the structure (1b) secant to the axis (X'X) of the parabolic edge (15), preferably perpendicular thereto.

16. Device according to claim 15, characterised in that said structure (1b) and said means of support (5) are, in one case, rotational about the axis (Z'Z) of the surface of revolution and, in the other case, fixed.

17. Device according to claim 15 or 16, characterised in that said means of support (5) consist of a second sandwich structure fitting around a surface of revolution (4'), having the same axis (Z'Z) as the first structure, and a secant edge (16') opposite that (16) of the first structure.

18. Device according to claim 17, characterised by several pairs of first and second structures (4, 4'; 41, 41') which are concentric with a same axis (Z'Z) of the surface of revolution.

19. Device according to any of claims 1 to 18, characterised in that it comprises a plurality (N) of second sandwich structures (1d₁ to 1d_{N}) having parabolic edges (15d₁ to 15d_{N}) with parabolic edge axes parallel to the parabolic edge axis of the first structure (1c), and edges (16d₁ to 16d_{N}) which are secant to the respective parabolic edge axes and which are aligned side by side opposite a secant edge (16c) of the first structure.

20. Device according to claim 19, characterised in that the secant edge (16c) of the first structure (1c) is covered with at least one anti-reflective coating.

21. Device according to claim 19 or 20, characterised in that the secant edges (16d₁ to 16d_{N}) of the second structures (1d₁ to 1d_{N}) are coated respectively with filtering layers which correspond to different wavelengths.
